# FASCICULE DE BREVET EUROPEEN

(11) **EP 3 286 500 B1**
(45) Date de publication et mention de la délivrance du brevet: **31.07.2019**
(21) Numéro de dépôt: 16723426.9
(22) Date de dépôt: 21.04.2016
(51) Int. Cl.: F23R 3/14, F23R 3/16, F23R 3/50, F23R 3/10, F02C 3/08

(54) **CHAMBRE DE COMBUSTION DE TURBOMACHINE COMPORTANT UN DISPOSITIF DE GUIDAGE DE FLUX D'AIR DE FORME SPÉCIFIQUE**
TUBOMASCHINENBRENNKAMMER MIT EINER LUFTSTROMFÜHRUNGSVORRICHTUNG MIT BESTIMMTER FORM
TURBOMACHINE COMBUSTION CHAMBER COMPRISING AN AIRFLOW GUIDE DEVICE OF SPECIFIC SHAPE

(30) Priorité: 23.04.2015 FR 1553657
(43) Date de publication de la demande: 28.02.2018
(73) Titulaire: Safran Aircraft Engines, 75015 Paris (FR)
(72) Inventeur: BOURGOIS, Sébastien, Alain, Christophe, 77550 Moissy Cramayel (FR); LUNEL, Romain, Nicolas, 77550 Moissy Cramayel (FR); BERNARD, Clément, 77550 Moissy Cramayel (FR); DOS SANTOS, Frédéric, 94210 La Varenne Saint Hilaire (FR); LOVAL, Sébastien, 77550 Moissy Cramayel (FR)
(74) Mandataire: Brevalex
(86) Numéro de dépôt international: PCT/FR2016/050937
(87) Numéro de publication internationale: WO 2017/013318

(56) Documents cités:
- FR-A1- 2 943 403
- FR-A1- 2 964 725
- GB-A- 739 093
- US-A1- 2014 345 286
- US-B1- 6 272 865

## Description

### DOMAINE TECHNIQUE

La présente invention se rapporte au domaine général des chambres de combustion équipant les turbomachines, et plus particulièrement au domaine des moyens d'alimentation en air pour de telles chambres de combustion.

L'invention s'applique à tout type de turbomachines terrestres ou aéronautiques, et notamment aux turbomachines d'aéronef telles que les turboréacteurs et les turbopropulseurs.

Elle concerne plus précisément une turbomachine selon la revendication 1.

### ÉTAT DE LA TECHNIQUE

Les turbomachines comprennent en général une chambre annulaire de combustion montée en aval d'un compresseur.

La chambre de combustion est délimitée en amont par un fond annulaire équipé de systèmes d'injection régulièrement répartis autour de l'axe de la turbomachine et destinés à l'injection d'un mélange d'air et de carburant dans la chambre de combustion.

Ces systèmes d'injection comportent des perçages périphériques par lesquels de l'air provenant du compresseur peut entrer, et des moyens de centrage et de guidage de têtes d'injecteurs de carburant. De plus, ces systèmes d'injection sont conçus pour optimiser les performances de la chambre de combustion et réduire ainsi sa consommation de carburant et les émissions de polluants en sortie de cette chambre de combustion.

En outre, la sortie du compresseur débouche dans une enceinte dans laquelle est logée la chambre de combustion. Le compresseur peut être du type axial et comporter une sortie sensiblement alignée avec les systèmes d'injection de la chambre de combustion, ou être de type centrifuge, et comporter en sortie un diffuseur annulaire débouchant dans une région radialement externe de l'enceinte de la chambre de combustion.

Les performances des systèmes d'injection sont de façon générale d'autant plus élevées que l'alimentation en air de ces systèmes est homogène autour de leurs axes respectifs.

Or, la sortie du compresseur étant distante axialement des systèmes d'injection, le flux d'air provenant du compresseur arrive en général au niveau des systèmes d'injection en étant réparti de manière hétérogène autour de chaque système d'injection.

Ce problème est tout particulièrement sensible dans le cas d'un compresseur du type centrifuge, dont la sortie d'air n'est pas alignée avec les systèmes d'injection de la chambre de combustion.

En effet, dans le cas d'une turbomachine équipée d'un compresseur du type centrifuge, le diffuseur se situe de manière excentrée par rapport à l'axe de la chambre de combustion de sorte que l'alimentation du fond de chambre par l'air sortant du diffuseur devient plus difficile à maîtriser que pour le cas d'une chambre de combustion alimentée par compresseur du type axial.

En particulier, l'excentrement du diffuseur conduit alors à de fortes hétérogénéités d'alimentation des systèmes d'injection qui entraînent une importante dissymétrie des champs thermodynamiques à l'intérieur du tube à flamme. Plus précisément encore, le défaut d'alimentation en air des vrilles, et notamment des vrilles de la zone pilote des systèmes d'injection, a pour conséquence d'obtenir une mauvaise distribution des gouttes de carburant dans la chambre de combustion, à l'origine alors de fortes hétérogénéités de la combustion dans le tube à flamme.

Ce phénomène a notamment été mis en évidence pour les points de fonctionnement ralenti de la turbomachine, pour lesquels la totalité du débit de carburant est injecté au niveau de la zone pilote des systèmes d'injection, mais il existe également pour des conditions de fonctionnement de la turbomachine du type plein gaz. Par ailleurs, si ce phénomène est présent sur les chambres de combustion conventionnelles pour lesquelles environ 20 % du débit d'air issu du compresseur traverse les systèmes d'injection, il est encore plus marqué sur les chambres de combustion multipoints pour lesquelles environ 70 % du débit d'air passe par les systèmes d'injection.

Alors, un tel phénomène engendre également comme inconvénients d'avoir une dégradation des indices d'émissions polluantes et l'apparition de points chauds dans la chambre de combustion pouvant conduire à des élévations locales de température au niveau des parois de la chambre de combustion ou du déflecteur de la chambre.

Il faut noter que des solutions ont déjà été décrites dans l'art antérieur pour tenter de remédier à la non uniformité de l'alimentation en air d'une chambre de combustion de turbomachine, provenant d'un diffuseur raccordé à la sortie d'un compresseur du type centrifuge. Ainsi, la demande de brevet FR 2 943 403 A1 de la Demanderesse décrit la réalisation de moyens améliorés d'alimentation en air d'une chambre de combustion de turbomachine, comprenant un collecteur d'air monté sur le fond de chambre. De plus, la demande de brevet US 2014/0345286 A1 enseigne également la réalisation d'un guide de flux d'air d'alimentation d'une chambre de combustion de turbomachine, fixé sur le système d'injection. Néanmoins, dans ces solutions de l'art antérieur, les conceptions du collecteur d'air et du guide de flux d'air ne sont pas suffisamment optimales en termes d'efficacité de captation et d'acheminement de l'air issu du compresseur, et notamment du diffuseur excentré raccordé à la sortie d'un compresseur du type centrifuge, pour alimenter les systèmes d'injection de la chambre de combustion. De plus, ces solutions ne sont pas non plus suffisamment adaptées pour faciliter le montage/démontage des systèmes d'injection en cas de besoin. En particulier, l'encombrement axial et/ou radial des dispositifs proposés n'est pas satisfaisant, et ne permet généralement pas l'engagement ou désengagement aisé de l'injecteur de la vrille principale, la rotation de l'injecteur entre l'éventuel diffuseur et le capotage de la chambre de combustion, ou encore la sortie de l'injecteur au niveau du carter externe sans modification structurelle. Document FR2964725 divulgue toutes les caractéristiques du préambule de la revendication 1.

Par ailleurs, pour des raisons d'encombrement axial par exemple, certains systèmes d'injection de chambre de combustion, notamment des systèmes d'injection multipoints, peuvent comporter des éléments spécifiques à leur fonctionnement directement exposés au flux d'air issu compresseur. Il peut notamment s'agir d'un tube de retour carburant, présent sur un système d'injection multipoint, permettant de récupérer le carburant utilisé pour le refroidissement de la cavité multipoint. Dans ce cas alors, ces éléments spécifiques peuvent être vulnérables aux éventuels débris présents dans ce flux d'air issu du compresseur, et par exemple éjectés par le diffuseur dans le cas d'un compresseur du type centrifuge.

### EXPOSÉ DE L'INVENTION

Par conséquent, il existe un besoin pour proposer une solution améliorée permettant de réduire, voire d'empêcher, les hétérogénéités d'alimentation en air issu du compresseur, notamment du type centrifuge, des systèmes d'injection de la chambre de combustion d'une turbomachine. Il existe également un besoin pour permettre de protéger d'éventuels éléments spécifiques présents sur ces systèmes d'injection, et utiles à leur fonctionnement, d'éventuels débris contenus dans le flux d'air alimentant la chambre de combustion de la turbomachine.

L'invention a ainsi pour but de remédier au moins partiellement aux besoins mentionnés ci-dessus et aux inconvénients relatifs aux réalisations de l'art antérieur.

L'invention a ainsi pour objet, selon l'un de ses aspects, une turbomachine selon la revendication 1.

Par « sphéroïde », on entend un ellipsoïde de révolution, soit une forme proche d'une sphère. En particulier, il peut s'agir d'un sphéroïde oblate, c'est-à-dire de forme aplatie, ou encore d'une véritable sphère.

Grâce à l'invention, il peut être possible d'obtenir une alimentation en air homogène, provenant du compresseur, des systèmes d'injection de la chambre de combustion d'une turbomachine. Ainsi, par exemple, dans le cas d'une chambre de combustion multipoint placée en aval d'un compresseur du type centrifuge, il peut être possible d'obtenir une symétrisation des écoulements dans le tube à flamme, laquelle permet une meilleure distribution du carburant dans la chambre de combustion à l'origine d'une combustion plus homogène (réduction des points chauds et amélioration en termes de pollution). De plus, cette symétrisation peut potentiellement permettre d'obtenir une meilleure stabilisation de la flamme, et donc des performances améliorées en termes d'opérabilité de la chambre de combustion. En outre, la solution proposée peut permettre, le cas échéant, de former une protection d'éléments spécifiques des systèmes d'injection, tels qu'un tube de retour carburant par exemple, contre d'éventuels débris, par exemple des débris ingérés ou des débris moteur, présents dans le flux d'air d'alimentation de la chambre de combustion, par exemple un flux d'air éjecté par le diffuseur dans le cas d'un compresseur du type centrifuge.

La chambre de combustion selon l'invention peut en outre comporter l'une ou plusieurs des caractéristiques suivantes prises isolément ou suivant toutes combinaisons techniques possibles.

De façon avantageuse, ladite au moins une paroi du dispositif de guidage de flux d'air peut comporter un premier bord et un deuxième bord respectivement inscrits dans un premier plan de coupe et un deuxième plan de coupe sensiblement orthogonaux entre eux, le dispositif de guidage étant monté sur le système d'injection par le biais du deuxième bord de ladite au moins une paroi.

Par ailleurs, l'axe du système d'injection peut être inscrit dans le premier plan de coupe, le premier bord étant alors coupé en son milieu par l'axe du système d'injection et formant le bord amont délimitant l'ouverture d'admission d'air du dispositif de guidage de flux d'air.

En outre, ladite au moins une paroi du dispositif de guidage de flux d'air peut comporter au moins un orifice d'évacuation, notamment situé à l'opposé de l'ouverture d'admission d'air du dispositif de guidage de flux d'air.

Un tel orifice d'évacuation peut notamment se présenter sous la forme d'un trou percé dans ladite au moins une paroi du dispositif de guidage de flux d'air. De façon avantageuse, un tel orifice d'évacuation peut permettre, en particulier pour les systèmes d'injection situés au point haut de la chambre de combustion, de faciliter l'évacuation d'eau pouvant par exemple s'accumuler dans le volume intérieur formant l'écope de guidage du flux d'air en cas d'ingestion d'eau et/ou de grêle, entre autres.

De plus, le dispositif de guidage de flux d'air peut être monté sur l'injecteur d'air et de carburant du système d'injection. En particulier, le dispositif de guidage du flux d'air peut être brasé sur l'injecteur d'air et de carburant.

Le dispositif de guidage de flux d'air peut par ailleurs être préférentiellement métallique, étant notamment choisi parmi les alliages ou super-alliages de métaux, notamment à base de nickel et alliés avec du chrome et du fer. En particulier, le dispositif de guidage de flux d'air peut être réalisé en Inconel625®, soit NiCr₂₂Mo₉Nb.

Par ailleurs, l'encombrement axial et/ou radial, préférentiellement l'encombrement axial et radial, du dispositif de guidage de flux d'air peut être sensiblement analogue à celui de l'injecteur d'air et de carburant du système d'injection.

La turbomachine comporte un compresseur du type centrifuge, dont la sortie est raccordée à un diffuseur radial, lui-même raccordé à un redresseur de flux débouchant dans une région radialement externe d'une enceinte dans laquelle la chambre de combustion est logée.

La chambre de combustion et la turbomachine selon l'invention peuvent comporter l'une quelconque des caractéristiques énoncées dans la description, prises isolément ou selon toutes combinaisons techniquement possibles avec d'autres caractéristiques.

### BRÈVE DESCRIPTION DES DESSINS

L'invention pourra être mieux comprise à la lecture de la description détaillée qui va suivre, d'un exemple de mise en oeuvre non limitatif de celle-ci, ainsi qu'à l'examen des figures, schématiques et partielles, du dessin annexé, sur lequel :
- la figure 1 représente partiellement, en coupe axiale, un exemple de turbomachine comportant une chambre de combustion conforme à un exemple de réalisation selon l'invention,
- la figure 2 représente partiellement, en perspective, l'exemple de turbomachine de la figure 1,
- la figure 3 représente, en perspective, un détail de la figure 2 montrant le dispositif de guidage de flux d'air de la chambre de combustion selon l'invention, et
- la figure 4 illustre partiellement, en perspective, le démontage d'un injecteur équipé d'un dispositif de guidage de flux d'air par rapport au fond de chambre de la chambre de combustion de la figure 2.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ D'UN MODE DE RÉALISATION PARTICULIER

Dans toute la description, il est noté que les termes amont et aval sont à considérer par rapport à une direction principale F d'écoulement normal des gaz (de l'amont vers l'aval) pour une turbomachine 10. Par ailleurs, on appelle axe T de la chambre de combustion 1 de la turbomachine 10, l'axe de symétrie radiale de la chambre de combustion 1 de la turbomachine 10. La direction axiale de la chambre de combustion 1 de la turbomachine 10 correspond à l'axe de rotation T de la chambre de combustion 1 de la turbomachine 10. Une direction radiale de la chambre de combustion 1 de la turbomachine 10 est une direction perpendiculaire à l'axe T de la chambre de combustion 1 de la turbomachine 10. En outre, sauf précision contraire, les adjectifs et adverbes axial, radial, axialement et radialement sont utilisés en référence aux directions axiale et radiale précitées. De plus, sauf précision contraire, les termes intérieur et extérieur sont utilisés en référence à une direction radiale de sorte que la partie intérieure d'un élément est plus proche de l'axe T de la chambre de combustion 1 de la turbomachine 10 que la partie extérieure du même élément.

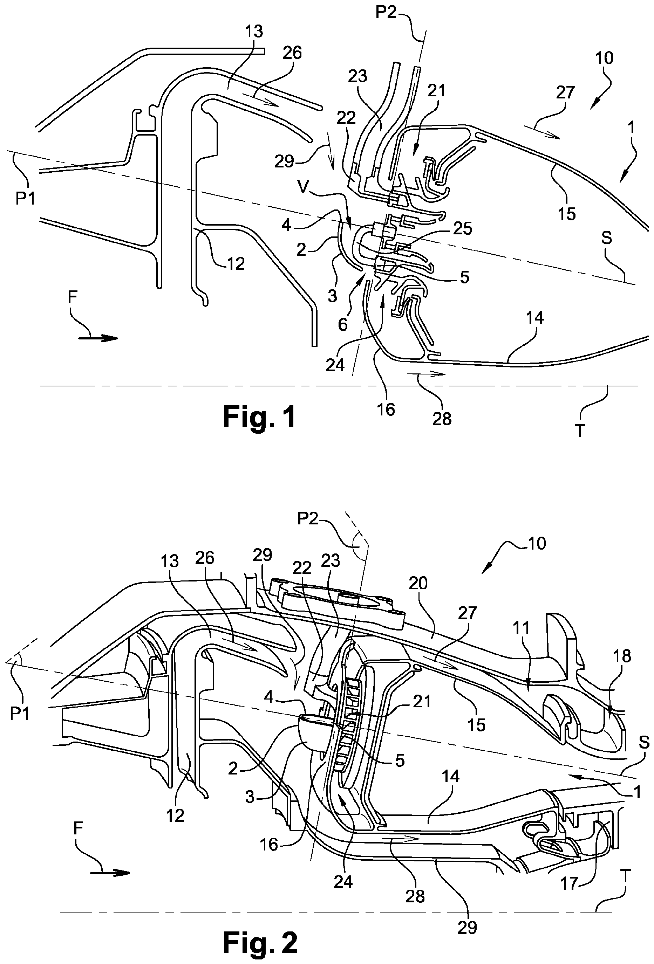

En référence aux figures 1 et 2, on a représenté schématiquement et partiellement un exemple de réalisation de turbomachine 10 comportant une chambre de combustion multipoint 1 conforme à l'invention.

Plus précisément, la figure 1 représente, en coupe axiale, la chambre de combustion 1 de la turbomachine 10 avec l'environnement immédiat de cette chambre de combustion 1, et la figure 2 représente, en perspective, la turbomachine 10 de la figure 1.

De façon connue, la chambre de combustion 1 est logée dans une enceinte 11 qui est agencée en aval d'un compresseur de la turbomachine 10, du type centrifuge, dont la sortie est raccordée à un diffuseur radial 12, lui-même raccordé en sortie à un redresseur de flux 13 qui débouche dans une région radialement externe de l'enceinte 11 de sorte que ce redresseur 13 est excentré.

La chambre de combustion 1 est délimitée par deux parois sensiblement cylindriques coaxiales 14 et 15, respectivement interne et externe, et par un fond de chambre annulaire 16 qui s'étend sensiblement radialement à l'extrémité amont de la chambre de combustion 1 et qui est raccordé par ses extrémités radiales aux deux parois 14 et 15.

Les parois interne 14 et externe 15 de la chambre de combustion 1 sont fixées en aval par deux viroles interne 17 et externe 18 respectivement sur une paroi interne 19 sensiblement cylindrique reliée au diffuseur 12, et sur un carter externe 20, de manière à délimiter l'enceinte 11.

En outre, des systèmes d'injection multipoints 21, qui sont régulièrement répartis autour de l'axe T de la chambre de combustion 1, sont montés dans le fond de chambre 16. Chaque système d'injection 21 comporte notamment une tête 22 d'un injecteur de carburant 23, et des orifices d'entrée d'air 24 agencés autour d'un axe S du système d'injection 21.

Les systèmes d'injection 21 sont configurés pour permettre un certain débattement radial et axial des têtes d'injecteur 22, pour tenir compte d'éventuelles dilatations différentielles de nature à provoquer des déplacements relatifs entre les injecteurs 23 et la chambre de combustion 1.

Par ailleurs, comme on peut le voir sur la figure 1, chaque système d'injection 21 comporte un tube de retour carburant 25, celui-ci permettant alors de récupérer le carburant utilisé pour le refroidissement de la cavité multipoint de la chambre de combustion 1.

En fonctionnement, un flux d'air 26 provenant du compresseur de type centrifuge est amené par le redresseur 13 dans l'enceinte 11.

Le flux d'air 26, qui arrive dans une région radialement externe de l'enceinte 11, se sépare globalement en trois parties dans cette enceinte 11.

Une première partie 27 du flux d'air s'écoule vers l'aval le long de la paroi externe 15 de la chambre de combustion 1, et pénètre partiellement dans la chambre de combustion 1 par des orifices (non représentés) pratiqués dans sa paroi externe 15.

Une deuxième partie 28 du flux d'air s'écoule vers l'aval le long de la paroi interne 14 de la chambre de combustion 1, et pénètre partiellement dans la chambre de combustion 1 par des orifices (non représentés) pratiqués dans sa paroi interne 14.

Enfin, une troisième partie 29 du flux d'air alimente les systèmes d'injection 21 de la chambre de combustion 1.

Conformément à l'invention, la chambre de combustion 1 est équipée d'une pluralité de dispositifs de guidage 2 de flux d'air 29, dont l'un est visible sur les figures 1 et 2.

De façon préférentielle, ce dispositif de guidage 2 de flux d'air 29 est réalisé en métal, et notamment à partir d'alliages ou de super-alliages de métaux, étant par exemple réalisé en Inconel625®, soit NiCr₂₂Mo₉Nb.

Dans cet exemple de réalisation, le dispositif de guidage 2 de flux d'air 29 est réalisé d'un seul tenant, et comporte ainsi une paroi 3 montée sur l'injecteur 23 du système d'injection 21, notamment par brasage. Cette paroi 3 se projette vers l'amont et forme un obstacle à un écoulement circonférentiel d'air autour de l'axe T de la chambre de combustion 1.

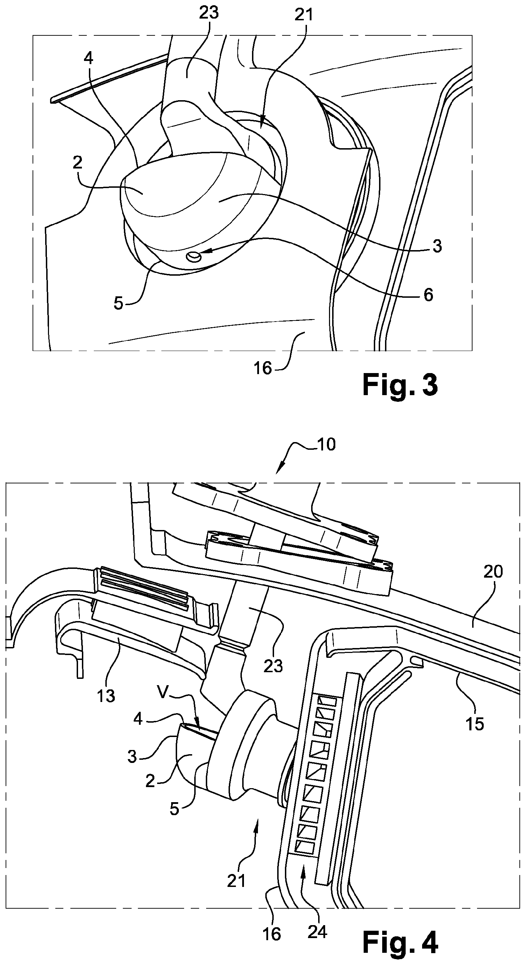

La figure 3 représente, en perspective, un détail de la figure 2 montrant de façon plus précise le dispositif de guidage 2 de flux d'air 29 de la chambre de combustion 1 de la turbomachine 10.

Comme on peut le voir sur les figures 1 à 3, la paroi 3 du dispositif de guidage 2 de flux d'air 29 présente une forme particulière permettant d'obtenir un guidage optimal du flux d'air 29 en direction de la zone pilote du système d'injection 21 multipoint. Plus précisément, la paroi 3 du dispositif de guidage 2 de flux d'air 29 présente une forme définissant sensiblement un quart de sphéroïde, et notamment un sphéroïde oblate de forme proche de celle d'une sphère, dont le volume intérieur V forme une écope de guidage du flux d'air 29 pour l'alimentation de la chambre de combustion 1.

De manière plus précise encore, comme on peut le voir sur la figure 2 notamment, la paroi 3 du dispositif de guidage 2 de flux d'air 29 comporte un premier bord 4 et un deuxième bord 5 respectivement inscrits dans un premier plan de coupe P1 et un deuxième plan de coupe P2 sensiblement orthogonaux entre eux.

Le dispositif de guidage 2 est alors monté, notamment par brasage, sur l'injecteur 23 du système d'injection 21 par le biais du deuxième bord 5 de la paroi 3.

De plus, l'axe S du système d'injection 21 est inscrit dans le premier plan de coupe P1, de sorte que le premier bord 4 soit alors coupé en son milieu par l'axe S du système d'injection 21 et forme le bord amont délimitant l'ouverture d'admission d'air du dispositif de guidage 2 de flux d'air 29, pour la pénétration de l'air provenant du redresseur 13.

De cette façon, le dispositif de guidage 2 de flux d'air 29 permet de réduire significativement les hétérogénéités d'alimentation de la zone pilote du système d'injection 21 multipoint. En particulier, la forme de la paroi 3 du dispositif de guidage 2 de flux d'air 29 est alors optimisée pour parvenir une alimentation en air sensiblement homogène de la zone pilote du système d'injection 21 multipoint.

Par ailleurs, le dispositif de guidage 2 permet également de constituer une protection efficace du tube de retour carburant 25 du système d'injection 21, de sorte que celui-ci soit correctement protégé contre tout débris éventuel pouvant être projeté par le redresseur 13.

En outre, comme on peut notamment le voir sur la figure 3, la paroi 3 du dispositif de guidage 2 de flux d'air 29 comporte, à l'opposé de l'ouverture d'admission d'air du dispositif de guidage 2 de flux d'air 29, un orifice d'évacuation 6, sous la forme d'un trou percé, qui permet de faciliter l'évacuation d'eau pouvant par exemple s'accumuler dans le volume intérieur V formant l'écope de guidage du flux d'air en cas d'ingestion d'eau et/ou de grêle.

Par ailleurs, la figure 4 illustre partiellement, en perspective, le démontage de l'injecteur 23 du système d'injection 21, équipé du dispositif de guidage 2 de flux d'air 29, par rapport au fond de chambre 16 de la chambre de combustion 1.

Comme on peut le constater sur cette figure 4, l'encombrement axial et radial du dispositif de guidage 2 de flux d'air 29 est analogue à celui de l'injecteur 23 du système d'injection 21. De cette façon, le dispositif de guidage 2 de flux d'air 29 présente la particularité d'être démontable, et de ne pas empêcher le démontage de l'injecteur 23.

Des essais comparatifs de performances entre une chambre de combustion 1 selon l'art antérieur, non équipée d'un dispositif de guidage 2 tel que décrit auparavant, et une chambre de combustion 1 conforme à l'invention, équipée d'un tel dispositif de guidage 2 de flux d'air 29, ont permis de mettre en évidence les avantages procurés par l'invention, à savoir : une homogénéisation du champ de température dans la chambre de combustion 1, une réduction des zones de production de monoxyde de carbone (CO), et surtout une ressymétrisation des écoulements permettant l'obtention d'un champ de vitesse plus homogène dans la chambre de combustion 1 et une extension des zones de recirculation, et ainsi une meilleure stabilisation de la flamme.

Ainsi, d'une manière générale et comme expliqué précédemment, les dispositifs de guidage 2 de flux d'air 29 de la chambre de combustion 1 conforme à l'invention permettent de canaliser le flux d'air 29 alimentant les systèmes d'injection 21 autour de chacun de ces systèmes, ce qui permet de rendre l'alimentation en air de ces systèmes plus homogène. Il en résulte ainsi une amélioration des performances générales de la chambre de combustion 1, et plus particulièrement une augmentation de son rendement et une réduction des émissions de substances polluantes par la chambre de combustion 1.

Bien entendu, l'invention n'est pas limitée à l'exemple de réalisation qui vient d'être décrit. Diverses modifications peuvent y être apportées par l'homme du métier.

## Revendications

1. Turbomachine (10), comportant :
- une chambre de combustion (1),
- un compresseur du type centrifuge, dont la sortie est raccordée à un diffuseur radial (12), lui-même raccordé à un redresseur de flux (13) débouchant dans une région radialement externe d'une enceinte (11) dans laquelle la chambre de combustion (1) est logée,
la chambre de combustion (1) comportant un fond de chambre (16), agencé à l'extrémité amont de la chambre de combustion (1), et une pluralité de systèmes d'injection d'air et de carburant (21), répartis circonférentiellement autour d'un axe (T) de la chambre de combustion (1) et montés sur le fond de chambre (16), la chambre de combustion (1) comportant, associé à chaque système d'injection (21), un dispositif de guidage (2) de flux d'air (29) comprenant au moins une paroi (3) montée sur le système d'injection (21) et se projetant vers l'amont, ladite au moins une paroi (3) formant obstacle à un écoulement circonférentiel d'air autour de l'axe (T) de la chambre de combustion (1),
**caractérisée en ce que** ladite au moins une paroi (3) du dispositif de guidage (2) de flux d'air (29) présente une forme définissant sensiblement un quart de sphéroïde dont le volume intérieur (V) forme une écope de guidage du flux d'air (29) pour l'alimentation de la chambre de combustion (1).

2. Turbomachine selon la revendication 1, **caractérisée en ce que** ladite au moins une paroi (3) du dispositif de guidage (2) de flux d'air (29) comporte un premier bord (4) et un deuxième bord (5) respectivement inscrits dans un premier plan de coupe (P1) et un deuxième plan de coupe (P2) sensiblement orthogonaux entre eux, le dispositif de guidage (2) étant monté sur le système d'injection (21) par le biais du deuxième bord (5) de ladite au moins une paroi (3).

3. Turbomachine selon la revendication 2, **caractérisée en ce que** l'axe (S) du système d'injection (21) est inscrit dans le premier plan de coupe (P1), le premier bord (4) étant alors coupé en son milieu par l'axe (S) du système d'injection (21) et formant le bord amont délimitant l'ouverture d'admission d'air du dispositif de guidage (2) de flux d'air (29).

4. Turbomachine selon l'une des revendications précédentes, **caractérisée en ce que** ladite au moins une paroi (3) du dispositif de guidage (2) de flux d'air (29) comporte au moins un orifice d'évacuation (6), notamment situé à l'opposé de l'ouverture d'admission d'air du dispositif de guidage (2) de flux d'air (29).

5. Turbomachine selon l'une quelconque des revendications précédentes, **caractérisée en ce que** le dispositif de guidage (2) de flux d'air (29) est monté sur l'injecteur d'air et de carburant (23) du système d'injection (21).

6. Turbomachine selon la revendication 5, **caractérisée en ce que** le dispositif de guidage (2) du flux d'air (29) est brasé sur l'injecteur d'air et de carburant (23).

7. Turbomachine selon l'une quelconque des revendications précédentes, **caractérisée en ce que** le dispositif de guidage (2) de flux d'air (29) est métallique, étant notamment choisi parmi les alliages ou super-alliages de métaux, notamment à base de nickel et alliés avec du chrome et du fer.

8. Turbomachine selon l'une quelconque des revendications précédentes, **caractérisée en ce que** l'encombrement axial et/ou radial du dispositif de guidage (2) de flux d'air (29) est sensiblement analogue à celui de l'injecteur d'air et de carburant (23) du système d'injection (21).

## Patentansprüche

1. Turbomaschine (10), die aufweist:
- eine Brennkammer (1),
- einen Turboverdichter, dessen Auslass mit einem Radialdiffusor (12) verbunden ist, der seinerseits mit einem Luftstromrichter (13) verbunden ist, der in einen radial äußeren Bereich eines abgeschlossenen Raums (11) mündet, in welchem die Brennkammer (1) aufgenommen ist,
wobei die Brennkammer (1) einen Kammerboden (16) aufweist, der am stromaufwärtigen Ende der Brennkammer (1) angeordnet ist, sowie eine Vielzahl von Luft- und Brennstoff-Einspritzsystemen (21) aufweist, die auf einem Umkreis um eine Achse (T) der Brennkammer (1) herum verteilt angeordnet und an dem Kammerboden (16) angebracht sind, wobei die Brennkammer (1) in Verbindung mit jedem Einspritzsystem (21) eine Führungsvorrichtung (2) für einen Luftstrom (29) enthält, die mindestens eine Wand (3) umfasst, die an dem Einspritzsystem (21) angebracht ist und stromaufwärts hervorragt, wobei diese mindestens eine Wand (3) ein Hindernis gegen ein umkreismäßiges Strömen von Luft um die Achse (T) der Brennkammer (1) herum bildet,
**dadurch gekennzeichnet,**
**dass** diese mindestens eine Wand (3) der Führungsvorrichtung (2) für einen Luftstrom (29) im Wesentlichen die Form einer Viertelkugel aufweist, deren Innenvolumen (V) einen Führungsschöpfer für den Luftstrom (29) zur Versorgung der Brennkammer (1) bildet.

2. Turbomaschine nach Anspruch 1,
**dadurch gekennzeichnet,**
**dass** diese mindestens eine Wand (3) der Führungsvorrichtung (2) für einen Luftstrom (29) einen ersten Rand (4) und einen zweiten Rand (5) aufweist, die in eine erste Schnittebene (P1) bzw. in eine zweite Schnittebene (P2) einbeschrieben sind, welche im Wesentlichen im rechten Winkel zueinander liegen, wobei die Führungsvorrichtung (2) mit der Schrägen des zweiten Randes (5) dieser mindestens einen Wand (3) an dem Einspritzsystem (21) angebracht ist.

3. Turbomaschine nach Anspruch 2,
**dadurch gekennzeichnet,**
**dass** die Achse (S) des Einspritzsystems (21) in die erste Schnittebene (P1) einbeschrieben ist, wobei der erste Rand (4) dann in seiner Mitte von der Achse (S) des Einspritzsystems (21) durchschnitten wird und den stromaufwärtigen Rand bildet, der die Luft-Einlassöffnung der Führungsvorrichtung (2) für den Luftstrom (29) umgrenzt.

4. Turbomaschine nach einem der vorherigen Ansprüche,
**dadurch gekennzeichnet,**
**dass** diese mindestens eine Wand (3) der Führungsvorrichtung (2) für den Luftstrom (29) mindestens eine Ablassöffnung (6) enthält, die sich insbesondere der Luft-Einlassöffnung der Führungsvorrichtung (2) für den Luftstrom (29) gegenüber befindet.

5. Turbomaschine nach einem der vorherigen Ansprüche,
**dadurch gekennzeichnet,**
**dass** die Führungsvorrichtung (2) für den Luftstrom (29) an dem Luft- und Brennstoffeinspritzer (23) des Einspritzsystems (21) angebracht ist.

6. Turbomaschine nach Anspruch 5,
**dadurch gekennzeichnet,**
**dass** die Führungsvorrichtung (2) für den Luftstrom (29) an dem Luft- und Brennstoffeinspritzer (23) angelötet ist.

7. Turbomaschine nach einem der vorherigen Ansprüche,
**dadurch gekennzeichnet,**
**dass** die Führungsvorrichtung (2) für den Luftstrom (29) aus Metall besteht, wobei dieses insbesondere unter den Metall-Legierungen oder -Superlegierungen gewählt ist, insbesondere auf Nickelbasis und mit Chrom und Eisen legiert.

8. Turbomaschine nach einem der vorherigen Ansprüche,
**dadurch gekennzeichnet,**
**dass** der axiale und/oder radiale Raumbedarf der Führungsvorrichtung (2) für den Luftstrom (29) im Wesentlichen analog dem des Luft- und Brennstoffeinspritzers (23) des Einspritzsystems (21) ist.

## Claims

1. Turbomachine (10), comprising:
- a combustion chamber (1),
- a centrifuged compressor, the output of which is connected to a radial diffuser (12), itself connected to a flow diverter (13) emerging in a radially external region of an enclosure (11) in which the combustion chamber (1) is housed,
said combustion chamber (1) comprising a chamber end wall (16) arranged at the upstream end of the combustion chamber (1) and a plurality of air and fuel injection systems (21) distributed circumferentially about an axis (T) of the combustion chamber (1) and mounted in the chamber end wall (16), the combustion chamber (1) comprising, associated with each injection system (21), a guide device (2) for guiding an airflow (29) comprising at least one wall (3) mounted on the injection system (21) and projecting in the upstream direction, said at least one wall (3) acting as an obstacle to a circumferential flow of air around the axis (T) of the combustion chamber (1),
**characterised in that** said at least one wall (3) of the guide device (2) for guiding the airflow (29) has a shape substantially defining a quarter of a spheroid the interior volume (V) of which forms a guide scoop for guiding the airflow (29) feeding the combustion chamber (1).

2. Turbomachine according to claim 1, **characterised in that** said at least one wall (3) of the device (2) guiding the airflow (29) comprises a first edge (4) and a second edge (5) respectively lying in a first cutting plane (P1) and a second cutting plane (P2) substantially orthogonal to each other, the guide device (2) being mounted on the injection system (21) by means of the second edge (5) of said at least one wall (3).

3. Turbomachine according to claim 2, **characterised in that** the axis (S) of the injection system (21) lies in the first cutting plane (P1), the first edge (4) then being intersected at its middle by the axis (S) of the injection system (21) and forming the upstream edge delimiting the air inlet opening of the device (2) guiding the airflow (29).

4. Turbomachine according to any of the preceding claims, **characterised in that** said at least one wall (3) of the device (2) guiding the airflow (29) may comprise at least one discharge orifice (6), in particular situated opposite the air inlet opening of the device (2) guiding the airflow (29).

5. Turbomachine according to any of the preceding claims, **characterised in that** the device (2) guiding the airflow (29) is mounted on the air and fuel injector (23) of the injection system (21).

6. Turbomachine according to claim 5, **characterised in that** the device (2) guiding the airflow (29) is brazed onto the air and fuel injector (23).

7. Turbomachine according to any of the preceding claims, **characterised in that** the device (2) guiding the airflow (29) is metal, in particular chosen from metal alloys or superalloys, being in particular based on nickel and alloyed with chromium and iron.

8. Turbomachine according to any of the preceding claims, **characterised in that** the axial and/or radial space requirement of the device (2) guiding the airflow (29) is substantially similar to that of the air and fuel injector (23) of the injection system (21).
